# EUROPEAN PATENT SPECIFICATION

(11) **EP 2 038 145 B1**
(45) Date of publication and mention of the grant of the patent: **16.03.2011**
(21) Application number: 07748277.6
(22) Date of filing: 26.06.2007
(51) Int. Cl.: B60R 19/56, B60R 19/14, B60R 19/18

(54) **UNDERRUN PROTECTOR AND METHOD OF PROVIDING UNDERRUN PROTECTION**
UNTERFAHRSCHUTZ UND VERFAHREN ZUR BEREITSTELLUNG EINES UNTERFAHRSCHUTZES
DISPOSITIF ANTI-ENCASTREMENT ET PROCEDE POUR FOURNIR UNE PROTECTION ANTI-ENCASTREMENT

(30) Priority: 29.06.2006 WO PCT/SE2006/000807
(43) Date of publication of application: 25.03.2009
(73) Proprietor: Volvo Lastvagnar AB, 405 08 Göteborg (SE)
(72) Inventor: ALVARSSON, Billy, S-517 71 Olsfors (SE)
(74) Representative: Fröhling, Werner Otto
(86) International application number: PCT/SE2007/000616
(87) International publication number: WO 2008/002242

(56) References cited:
- EP-A1- 0 589 227
- DE-A1- 19 643 049
- DE-A1- 19 746 567
- DE-A1- 19 907 783
- JP-A- 2003 072 493
- JP-A- 2004 243 831
- US-A- 1 416 358
- US-A- 5 000 499

## Description

### Technical field of the invention

The present invention relates to underrun protectors, for example to front underrun protectors for incorporation into front regions of heavy vehicles for resisting in operation frontal impacts from smaller vehicles such as automobiles thereto. The present invention is also pertinent to rear underrun protectors for incorporation into rear regions of such heavy vehicles. Moreover, the present invention also relates to methods of resisting impacts of smaller vehicles onto larger vehicles by way of such underrun protectors included in front and/or rear regions of such heavy vehicles. Furthermore, the present invention also concerns heavy vehicles equipped with such underrun protectors.

### Background of the invention

Safety structures included in heavy vehicles, for example commercial heavy goods vehicles, have been developed in response to safety standards and public demand. Such safety structures include front underrun protectors which are operable to reduce damage and injury to people travelling in smaller vehicles when subject to frontal impact events with such heavy vehicles. Front underrun protectors are designed to absorb impact energy and resist smaller vehicles from becoming trapped, namely wedged, beneath heavy goods vehicles during impact events.

Conventionally, underrun protectors are operable to absorb impact energy by way of inelastic deformation of parts thereof. During impact events, energy absorption also occurs by way of deformation of parts of smaller vehicles crashing into such underrun protectors, for example impact energy is absorbed by inelastic deformation of crumple zones of such smaller vehicles. Impact energy absorption in front underrun protectors in combination with energy absorption in smaller vehicles, for example by way of deformation of aforesaid crumple zones therein, is thus capable of reducing severity of personal injuries occurring during impact events.

Conventionally, front underrun protectors are designed to absorb impact energy by inelastic deformation when impact forces applied thereto exceed a given threshold magnitude. Front underrun protectors for heavy vehicles are often implemented such that each protector includes two deformation elements coupled to left and right principal longitudinal frame members of its corresponding heavy vehicle onto which the protector is mounted.

A commonly occurring crash situation involves a smaller vehicle crashing off-centre in relation to a front underrun protector of a heavy vehicle. Aforesaid deformation elements of the protector are therefore designed taking into account such off-centre impact events.

However, a technical problem arises in respect of a head-on collision by a smaller vehicle onto a front underrun protector of a heavy vehicle substantially in a direction of a central longitudinal axis of the heavy vehicle; such head-on collision requires both deformation elements of the underrun protector to be subjected to sufficient force for them to undergo inelastic deformation. In other words, a conventional underrun protector is operable to exhibit, in relation to a threshold force required to be applied thereto to obtain inelastic deformation therein, an impact protection characteristic which is angularly variable relative to a central longitudinal axis of a heavy vehicle onto which the front underrun protector is mounted. As a consequence, a degree to which a front underrun protector can mitigate in a collision event depends on a direction in which collision forces are applied to the front underrun protector.

US-A-5 000 499 discloses an underrun protector according to the preamble of claim 1 comprising a deflectable vehicle bumper having a plurality of beam elements. Two adjacent elements are joined together by a member designed to fracture when a predetermined force is applied thereto. Also, the two adjacent elements are joined by a resilient hinge to retain the elements after fracture has occurred.

### Summary of the invention

An object of the invention is to provide an underrun protector which is operable to undergo inelastic deformation to absorb impact energy when an impact force is applied thereto which is less dependent upon a direction in which the force is applied to the protector.

According to a first aspect of the invention, there is provided an underrun protector for a vehicle as claimed in appended claim 1; the protector includes a plurality of beam elements mutually pivotally joined together and supported in relation to a frame of the vehicle,

According to a first aspect of the invention, there is provided an underrun protector for a vehicle as claimed in appended claim 1; the protector includes a plurality of beam elements mutually pivotally joined together and supported in relation to a frame of the vehicle, wherein the plurality of beam elements are also mutually coupled together by one or more locking elements which are operable to rupture when forces applied thereto during an impact of an object onto the protector exceed one or more threshold magnitudes, and wherein rupturing of the one or more locking elements during an impact event of the object causes the plurality of beam elements to at least partially conform to a contact profile of the object to the protector for more uniformly distributing impact forces arising in the impact event, and is characterized in that the locking element is a continuous V-shape welded structure which is firmly attached at its free ends to rear surfaces of the beam elements.

The invention is of benefit in that enhanced conformity of the plurality of beam elements to the object during the impact event after rupturing of the one or more locking elements is capable of reducing severity of impact damage.

Optionally, in the underrun protector, the plurality of beam elements are operable to pivot inwardly towards the vehicle during the impact event for at least partially conforming to the contact profile of the object onto the protector. Enhanced conformity of the plurality of beam elements in an impact event directed along a central longitudinal axis of the vehicle is thereby capable of being achieved.

Optionally, to obtain an enhanced rupturing and yielding characteristic, in the underrun protector, each locking element includes a folded structure which is attached onto its respective adjacent beam elements.

More optionally in the underrun protector, the folded structure has one or more folds thereof rupturably joined together so as to define a threshold magnitude of force at which the folded structure is operable to yield and unfold, the one or more rupturable folds being joined together by at least one of: welded seams, rivets, screws and nuts, inter-engaging projections. Such joining of the folds is capable of absorbing considerable impact energy expended in rupturing the welded seams, rivets, screws and nuts, and/or inter-engaging projections. Absorption of the impact energy is capable of reducing damage and/or injury occurring during the impact event

More optionally, in the underrun protector, each locking structure is operable to exhibit a first threshold force at which it is operable to rupture for unfolding, and a second threshold force above which the locking structure is fully unfolded and operable to rupture by way of extensive tension applied thereto. By such multiple rupturing, the protector is more continuously able to continue to absorb impact energy for a duration of an impact event.

Optionally, in the underrun protector, one or more of the locking structures are mutually different for providing a range of mutually different magnitudes of forces at which they are operable to rupture, thereby providing the protector with a more progressive yielding characteristic during the impact event

Optionally, the underrun protector is implemented as a front underrun protector (FUP) or a rear underrun protector (REP).

According to a second aspect of the invention, there is provided a vehicle equipped with one or more underrun protectors pursuant to the first aspect of the invention. The vehicle is optionally a heavy vehicle, for example a bus, a truck, a commercial goods vehicle, a tractor and similar.

According to a third aspect of the invention, there is provided a method of providing unnderrun protection in a vehicle equipped with an underrun protector as claimed in appended claim 9; the method comprises steps of:
(a) receiving an impact of an object onto the protector including a plurality of beam elements mutually pivotally joined together and supported in relation to a frame of the vehicle;
(b) when forces generated during the impact of the object onto the protector exceed one or more threshold magnitudes, rupturing one or more locking elements mutually coupling the plurality of beam elements together, and forming a continuous V-shape welded structure which is firmly attached at its free ends to rear surfaces of the beam elements (304),
(c) allowing the plurality of beam elements to mutually pivot so as to at least partially conform to a contact profile of the object to the protector for more uniformly distributing impact forces arising in the impact.

Optionally, when implementing the method, the folded structure has one or more folds thereof rupturably joined together so as to define a threshold magnitude of force at which the folded structure is operable to yield and unfold, the one or more rupturable folds being joined together by at least one of: welded seams, rivets, screws and nuts, inter-engaging projections.

Optionally, when implementing the method, each locking structure is operable to exhibit a first threshold force at which it is operable to rupture for unfolding, and a second threshold force above which the locking structure is fully unfolded and operable to rupture by way of extensive tension applied thereto.

Optionally, when implementing the method, one or more of the locking structures are mutually different for providing a range of mutually different magnitudes of forces at which they are operable to rupture, thereby providing the protector with a more progressive yielding characteristic during the impact.

It will be appreciated that features of the invention are susceptible to being combined in any combination without departing from the scope of the invention as defined by the appended claims.

### Description of the diagrams

The present invention will now be described, by way of example only, with reference to the following drawings wherein:
- Figure 1: is a schematic illustration of a heavy vehicle including a front underrun protector pursuant to the present invention;
- Figure 2: is a schematic Illustration of the front underrun protector shown in Figure 1;
- Figures 3a to 3d: are schematic illustrations of a split underrun protection beam pursuant to the present invention.

### Detailed description of embodiments of the invention

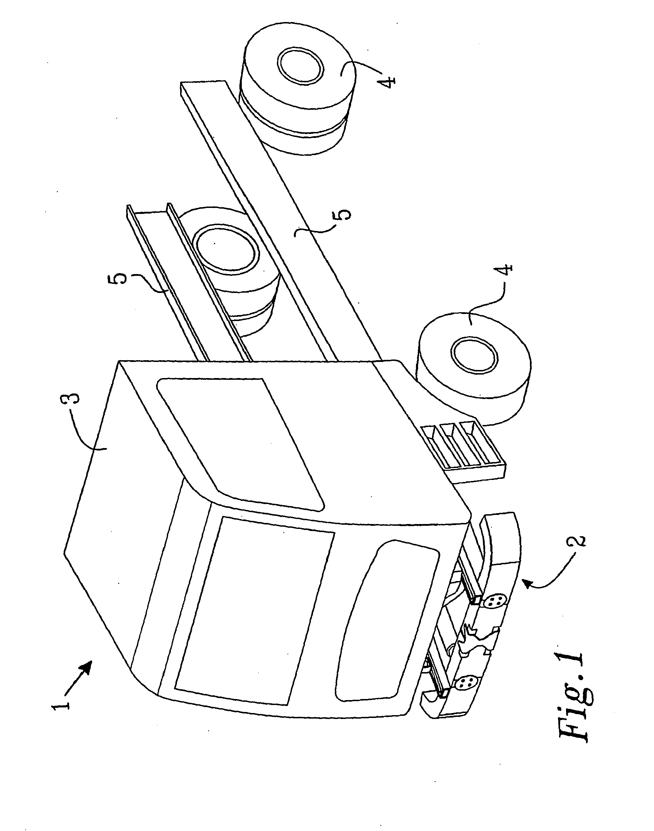

Referring to Figure 1, a heavy vehicle is shown in indicated generally by **1**; the vehicle **1** is, for example, a commercial heavy goods vehicle such as a truck, a gas delivery truck, a refuse collection vehicle or similar. Moreover, the vehicle **1** includes a front underrun protector (FUP) **2** installed at a front lower region thereof. The vehicle **1** further comprises a frame **5**, and wheels **4** rotatably mounted in respect of the frame **5**. A cabin **3** is also included at a front region of the vehicle **1**. Although not shown in Figure 1, the vehicle **1** further comprises an engine, a gear box coupled to the engine, and power distribution components for receiving in operation motive power generated by the engine and coupled therefrom via the gear box to the distribution components. The power distribution components are further coupled to the wheels **4** so that motive power from the engine is coupled in operation to the wheels **4** for propelling the vehicle **1**.

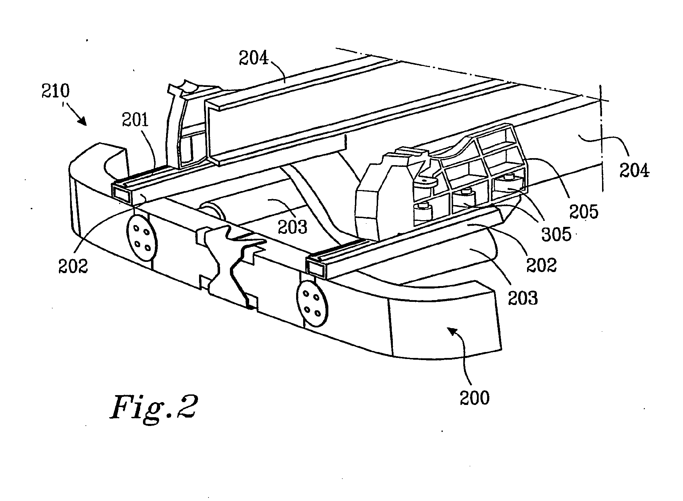

Referring next to Figure 2, the front underrun protector **2** is illustrated in greater detail. The front underrun protector **2** includes a front underrun protection beam **200** which, in operation, is disposed transversely across a lower front region of the vehicle **1**. The beam **200** is an elongate component whose ends are backwardly curved as illustrated. Moreover, the beam **200** is supported near its ends by two frame connectors denoted by **202**. The frame connectors **202** are, in turn, supported to the frame **5** of the vehicle **1**; the frame **5** is denoted by **204** in Figure 2.

Optionally, there is included a console **250** on the vehicle 1 as illustrated. The console **250** is mounted onto the frame **204** and also onto an associated aforesaid frame connector **202**. Optionally, a rail **201** is mounted between the frame connector **202** and the console **250**; the rail **201** is operable to enable the console **205** to be translated relative to the beam **200** and the frame connector **202**.

The beam **200** is fabricated from a stiff material, for example from a metal such as steel or aluminium, metal alloy such as an aluminium alloy, or from a reinforced ceramic material. Optionally, the metal or metal alloy is extruded or otherwise formed into a three-dimension structure including voids therein for providing an enhanced degree of rigidity and yet reduced weight. More optionally, the voids are at least partially filled with energy-absorbing materials such as compressible polymer plastics material foams. Other materials can be used to fabricate the beam **200**, for example carbon-fibre reinforced composite materials.

The front underrun protector (FUP) **2** incorporates several components. Certain of the components are intended to remain rigid during an impact event, whereas other of the components are designed to absorb impact energy by way of inelastic deformation during the impact event. As elucidated in the foregoing, an impact of a smaller vehicle onto the front underrun protector (FUP) **2** involves impact energy being absorbed in crumple zones of the smaller vehicle in addition to energy absorption occurring in the front underrun protector **2**.

The beam **200** is designed to be sufficiently robust to withstand impact forces and couple the forces to deformation zone elements denoted by **203**. Optionally, the beam **200** is coupled to a bumper structure (not shown) which, in turn, is coupled to another part of the vehicle **1**, for example to the frame denoted by **5** and **204**. The bumper structure is operable to absorb relatively small impact forces, for example impact forces which are generated when the vehicle **1** impacts into stacks of goods in a loading area, or when the vehicle **1** is manoeuvring at speeds of less than substantially 10 km/h in respect of other vehicles, for example at speeds in a range of 0 km/h to 15 km/h. As will be elucidated in greater detail later, the front underrun protector **2**, also denoted by **210** in Figure 2, is arranged to provide its principal energy-absorbing function when impact forces applied thereto exceed a certain predefined magnitude. This predefined magnitude is greater than the aforesaid bumper structure is designed to accommodate during an impact event. Moreover, the predefined magnitude is optionally determined by regulatory safety standards.

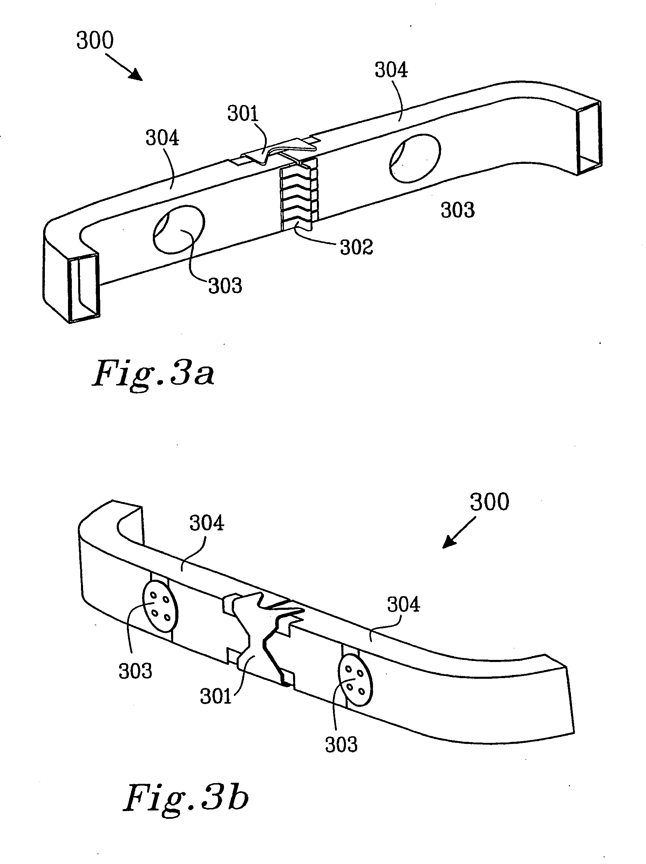

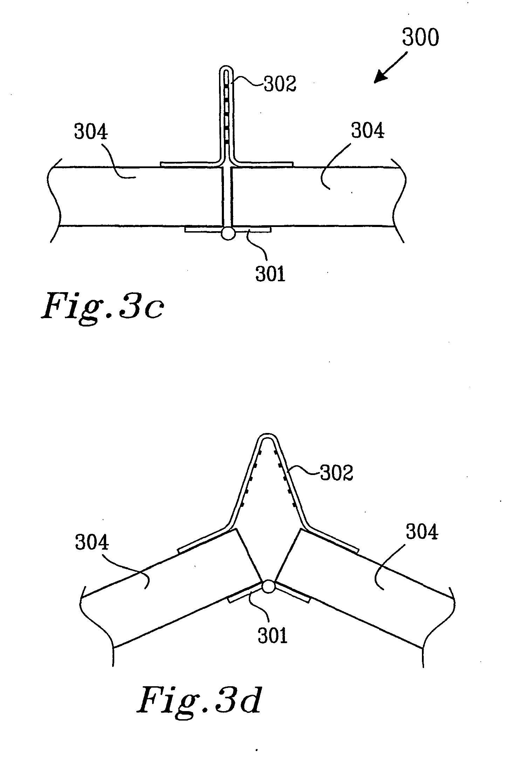

Referring next to Figures 3a to 3d, the beam **200** is denoted by **300** and is shown in various orientations. For example, in Figure 3a, the beam **300** is shown in rear view. Moreover, the beam **300** is shown in front view in Figure 3b. Furthermore, a central portion of the beam **300** is shown in Figure 3c prior to an impact event, and is shown in Figure 3d after an impact event.

The beam **300** comprises two shanks **304** which are mutually pivotally joined at a central position at the aforesaid central portion. Each shank **304** constitutes a stiff component which is designed to remain intact during an impact event; as elucidated in the foregoing, each shank **304** is beneficially a hollow component for reducing its weight. The two shanks **304** are coupled together at the central position by a pivotal joint **301** towards a front of the beam **300**, and by a locking element **302** towards a rear of the beam **300** as illustrated in Figures 3a, 3c and 3d most clearly. The locking element **302** is a continuous V-shape welded structure which is firmly attached at its free ends to rear surfaces of the shanks **304** as illustrated in Figures 3a, 3c and 3d. Optionally, the beam **300** includes mating structures **303** for receiving deformation zone elements **203** implemented as crash tubes. The mating structures **303** optionally include stop elements for securing the deformation zone elements **203** to the beam **300**.

Beneficially, the aforesaid pivotal joint **301** is disposed at a middle region of the beam **300** substantially whereat a smaller vehicle is susceptible to impacting centrally and frontally onto the beam **300**. Prior to an impact event occurring, the two shanks **304** are coupled together not only by the pivotal joint **301**, but also by a welded seam provided along the locking element **302** as illustrated.

In an event of a smaller vehicle impacting centrally and frontally onto the beam **300**; impact energy is expended in stressing the aforesaid welded seam and ultimately causing the seam to break; impact energy is thereby absorbed in performing mechanical work in breaking the seam. However, during the impact event, the locking element **302** remains intact to continue to couple the two shanks **304** mutually together and is deformed as illustrated in Figure 3d simultaneously whilst the two shanks **304** mutually pivot; such deformation of the locking element **302** enables the shanks **304** to assume a spatial configuration which conforms to a greater degree to a contact profile at a front region of the smaller vehicle. Such a greater degree of conformity provides an advantage that impact forces generated during the impact event are more uniformly distributed across the contact profile which assists with crumple zones present in the smaller vehicle absorbing impact energy; injury to people present in the smaller vehicle can thereby potentially be mitigated.

Figure 3c, the locking element **302** is illustrated in its folded state with its welded seam intact. In Figure 3d, the locking element **302** is illustrated with its welded seam broken and partially unfolded. The locking element **302** can be implemented so that it completely unfolds to form a band coupling the shanks **304** together. Further impact energy can then be potentially expended in rupturing the band. In this respect, the locking element **302** is capable of providing a plurality of threshold forces at which it is capable of absorbing considerable impact energy. Moreover, as illustrated in Figure 3a, the shanks **304** can be mutually joined together by a plurality of such locking elements **302**. Furthermore, the seams of the locking elements **302** can be designed to break when mutually different stresses are applied thereto. Yet additionally, the locking elements **302** are beneficially of mutually different length so that certain thereof are fully extended before others thereof during an impact event as the beam **200** is progressively deformed; the locking elements **302** thereby become fully extended at mutually different times and thereby potentially provide a more gradual absorption of impact energy as a function of applied impact force onto the beam **200** during an impact event.

In will be appreciated that the aforesaid welded seam is beneficially employed when fabricating the locking element **302**. However, additionally or alternatively, the locking element **302** can be held together in its folded state by using rivets, screws and nuts, folded interlocking tongues of metal. Although the locking element **302** is illustrated as a generally "V"-shape structure, it can if necessary include more than one fold in a manner of a concertina-type structure. However, a single fold is potentially easier and faster to implement during manufacture of the locking device **302**.

The front underrun protector **2** is also beneficial to employ when a non-central side impact thereto occurs because one of the deformation elements **203** associated with a side at which impact occurs is operable to absorb energy, assisted if necessary by partial or complete rupturing of the one or more locking elements **302**.

Conveniently, the front underrun protector **2** is pre-assembly and subsequently mounted onto the frame **5** of the vehicle **1**, thereby reducing assembly time and cost when fabricating or repairing the vehicle **1**. The protector **2** is optionally designed to fit different types of vehicles, for example aforesaid heavy vehicles, having diverse fastening arrangements associated with their frames. Moreover, the protector **2** implemented as a pre-assembled module optionally includes other functional components such as headlights, turning directional flashers, proximity sensors to mention a few examples. Although the front underrun protector **2** has been described in the foregoing for use in a front region of a heavy vehicle, the underrun protector **2** is also susceptible to being employed as a rear underrun protector (RUPS). Moreover, although the beam **300** is described as comprising the two shanks **304** and one pivotal joint **301**, it will be appreciated that beam **300** can be implemented to include more than two shanks and a plurality of pivotal joints to mutually join the more than two shanks together to form the beam **300**; for example, the protector **2** is optionally implemented to include a short central shank coupled via two pivotal joints to two side shanks, wherein the short central shanks is shorter than a distance between two principal longitudinal beams of the aforesaid frame **5**. Including more than two such shanks in a modified version of the protector **2** potentially enhances an ability of the protector **2** to conform to a contact profile of a smaller vehicle impacting thereonto.

Embodiments of the invention described in the foregoing are susceptible to being modified without departing from the scope of the invention as defined by the appended claims.

Expressions such as "comprising", "including", "having", "incorporating", "containing", "is" do not exclude other elements or steps than those explicitly elucidated. Reference signs included in parentheses in the appended claims are intended to assist in understand subject matter claimed in the claims and are not intended to influence the scope of the claims.

## Claims

1. An underrun protector (2) for a vehicle (1), said protector (2) including a plurality of beam elements (304) mutually pivotally joined together and supported in relation to a frame (5) of said vehicle (1), wherein said plurality of beam elements (304) are also mutually coupled together by one or more locking elements (302) which are operable to rupture when forces applied thereto during an impact of an object onto the protector (2) exceed one or more threshold magnitudes, and wherein rupturing of said one or more locking elements (302) during an impact event of said object causes said plurality of beam elements (304) to at least partially conform to a contact profile of said object to said protector (2) for more uniformly distributing impact forces arising in said impact event, **characterized in that** the locking element (302) is a continuous V-shape welded structure which is firmly attached at its free ends to rear surfaces of the beam elements (304).

2. An underrun protector (2) as claimed in claim 1, wherein said plurality of beam elements (304) are operable to pivot inwardly towards said vehicle (1) during said impact event for at least partially conforming to said contact profile of said object onto said protector (2).

3. An underrun protector (2) as claimed in claim 1, wherein each locking element (302) includes a folded structure which is attached onto its respective adjacent beam elements (304).

4. An underrun protector (2) as claimed in claim 3, wherein said folded structure has one or more folds thereof rupturably joined together so as to define a threshold magnitude of force at which said folded structure is operable to yield and unfold, said one or more rupturable folds being joined together by at least one of; welded seams, rivets, screws and nuts, inter-engaging projections.

5. An underrun protector (2) as claimed in claim 3, wherein each locking structure (302) is operable to exhibit a first threshold force at which it is operable to rupture for unfolding, and a second threshold force above which the locking structure (302) is fully unfolded and operable to rupture by way of extensive tension applied thereto.

6. An underrun protector (2) as claimed in claim 1, wherein one or more of the locking structures (302) are mutually different for providing a range of mutually different magnitudes of forces at which they are operable to rupture, thereby providing said protector (2) with a more progressive yielding characteristic during said impact event

7. An underrun protector (2) as claimed in claim 1, implemented as a front underrun protector or as a rear underrun protector.

8. A vehicle (1) equipped with one or more underrun protectors (2) as claimed in claim 1.

9. A method of providing underrun protection in a vehicle (1) equipped with an underrun protector (2), said method comprising steps of:
(a) receiving an impact of an object onto said protector (2) including a plurality of beam elements (304) mutually pivotally joined together and supported in relation to a frame (5) of said vehicle (1);
(b) when forces generated during said impact of said object onto said protector (2) exceed one or more threshold magnitudes, rupturing one or more locking elements (302) mutually coupling said plurality of beam elements (304) together and forming a continuous V-shape welded structure which is firmly attached at its free ends to rear surfaces of the beam elements (304).
(c) allowing said plurality of beam elements (304) to mutually pivot so as to at least partially conform to a contact profile of said object to said protector (2) for more uniformly distributing impact forces arising in said impact.

10. A method as claimed in claim 9, wherein said folded structure has one or more folds thereof rupturably joined together so as to define a threshold magnitude of force at which said folded structure is operable to yield and unfold, said one or more rupturable folds being joined together by at least one of: welded seams, rivets, screws and nuts, inter-engaging projections.

11. A method as claimed in claim 9, wherein each locking structure (302) is operable to exhibit a first threshold force at which it is operable to rupture for unfolding, and a second threshold force above which the locking structure (302) is fully unfolded and operable to rupture by way of extensive tension applied thereto.

12. A method as claimed in claim 9, wherein one or more of the locking structures (302) are mutually different for providing a range of mutually different magnitudes of forces at which they are operable to rupture, thereby providing said protector (2) with a more progressive yielding characteristic during said impact

## Patentansprüche

1. Unterlaufschutz (2) für ein Fahrzeug (1), wobei der Schutz (2) eine Vielzahl von Trägerelementen (304) aufweist, die gegenseitig schwenkbar miteinander verbunden sind und bezüglich eines Rahmens (5) des Fahrzeugs (1) gelagert sind, wobei die Vielzahl von Trägerelementen (304) außerdem gegenseitig durch ein oder mehrere Verriegelungselemente (302) miteinander gekoppelt sind, die zum Brechen bringbar sind, wenn während eines Aufpralls eines Objekts auf den Schutz (2) auf sie wirkende Kräfte eine oder mehrere Schwellengrößen überschreiten, und wobei ein Brechen einer oder mehrerer Verriegelungselemente (302) während eines Aufprallereignisses des Objekts verursacht, dass die Vielzahl von Trägerelementen (304) sich wenigstens teilweise an ein Kontaktprofil des Objekts auf dem Schutz (2) anpassen, damit Aufprallkräfte gleichmäßiger verteilt werden, die bei dem Aufprallereignis auftreten, **dadurch gekennzeichnet, dass** das Verriegelungselement (302) eine fortlaufende V-förmige geschweißte Struktur ist, die fest an ihren freien Enden an Rückflächen der Trägerelemente (304) befestigt ist.

2. Unterlaufschutz (2) nach Anspruch 1, bei dem die Vielzahl von Trägerelementen (304) während des Aufprallereignisses zum Schwenken nach innen in Richtung des Fahrzeugs (1) bringbar ist, um das Kontaktprofil des Objektes auf dem Schutz (2) wenigstens teilweise anzupassen.

3. Unterlaufschutz (2) nach Anspruch 1, bei dem jedes Verriegelungselement (302) eine gefaltete Struktur aufweist, die an ihren jeweils angrenzenden Trägerelementen (304) befestigt ist.

4. Unterlaufschutz (2) nach Anspruch 3, bei dem die gefaltete Struktur eine oder mehrere Falten aufweist, die brechbar miteinander verbunden ist, um eine Schwellengröße einer Kraft zu bilden, bei der die gefaltete Struktur zum Nachgeben und Brechen gebracht werden kann, wobei eine oder mehrere brechbare Falten miteinander durch wenigstens eines miteinander verbunden sind von: geschweißten Nähten, Nieten, Schrauben und Muttern, miteinander eingreifenden Vorsprüngen.

5. Unterlaufschutz (2) nach Anspruch 3, bei dem die Verriegelungsstruktur (302) so funktioniert, dass sie eine erste Schwellenkraft aufweist, bei der sie zum Brechen und Entfalten gebracht werden kann, und eine zweite Schwellenkraft aufweist, oberhalb der die Verriegelungsstruktur (302) vollständig entfaltet wird und durch eine auf sie aufgebrachte extensive Spannung zum Brechen gebracht werden kann.

6. Unterlaufschutz (2) nach Anspruch 1, bei dem eine oder mehrere der Verriegelungsstrukturen (302) gegenseitig unterschiedlich sind, um einen Bereich gegenseitig unterschiedlicher Größen von Kräften zu schaffen, bei denen sie zum Brechen gebracht werden können, wodurch der Unterlaufschutz (2) mit einer progressiveren Nachgebe-Charakteristik während des Aufprallereignisses versehen wird.

7. Unterlaufschutz (2) nach Anspruch 1, ausgeführt als vorderer Unterlaufschutz oder als hinterer Unterlaufschutz.

8. Fahrzeug (1), das mit einem oder mehreren Unterlaufschutzen (2) nach Anspruch 1 ausgestattet ist.

9. Verfahren zur Bereitstellung eines Unterlaufschutzes in einem Fahrzeug (1), das mit einem Unterlaufschutz (2) versehen ist, wobei das Verfahren die Schritte umfasst:
(a) Aufnahme eines Aufpralls eines Objekts auf den Schutz (2), der eine Vielzahl von Trägerelementen (304) aufweist, die gegenseitig miteinander schwenkbar verbunden sind und bezüglich eines Rahmens (5) des Fahrzeugs (1) gelagert sind,
(b) wenn Kräfte während des Aufpralls des Objekts auf den Schutz (2) erzeugt werden, die eine oder mehrere Schwellengrößen überschreiten, Brechen einer oder mehrerer Verriegelungselemente (302), die die Vielzahl von Trägerelementen (304) gegenseitig miteinander koppeln und eine fortlaufend V-förmige geschweißte Struktur bilden, die an ihren freien Enden an Rückflächen der Trägerelemente (304) fest angebracht sind,
(c) Ermöglichen einer gegenseitigen Verschwenkung der Vielzahl von Trägerelementen (304), damit sie sich wenigstens teilweise an ein Kontaktprofil des Objekts auf dem Schutz (2) anpassen, um Aufprallkräfte gleichmäßiger zu verteilen, die bei dem Aufprall auftreten.

10. Verfahren nach Anspruch 9, bei dem die gefaltete Struktur eine oder mehrere Falten aufweist, die brechbar miteinander so verbunden sind, dass sie eine Schwellengröße einer Kraft definieren, bei der die gefaltete Struktur zum Nachgeben und Brechen gebracht werden kann, wobei eine oder mehrere brechbare Falten miteinander durch wenigstens eines verbunden sind von: geschweißten Nähten, Nieten, Schrauben und Muttern, miteinander eingreifenden Vorsprüngen.

11. Verfahren nach Anspruch 9, bei dem jede Verriegelungsstruktur (302) so funktioniert, dass sie eine erste Schwellenkraft aufweist, bei der sie zum Brechen für ein Entfalten gebracht werden kann, und eine zweite Schwellenkraft aufweist, oberhalb der die Verriegelungsstruktur (302) vollständig entfaltet wird und mittels einer auf sie ausgeübten extensiven Spannung zum Brechen gebracht werden kann.

12. Verfahren nach Anspruch 9, bei dem eine oder mehrere der Verriegelungsstrukturen (302) gegenseitig unterschiedlich sind, um einen Bereich gegenseitig unterschiedlicher Größen von Kräften bereitzustellen, bei denen sie zum Brechen gebracht werden können, wodurch der Schutz (2) mit einer progressiveren Nachgebe-Charakteristik während des Aufpralls versehen wird.

## Revendications

1. Dispositif anti-encastrement (2) pour un véhicule (1), ledit dispositif (2) comprenant une pluralité d'éléments de poutre (304) reliés ensemble de manière à pivoter mutuellement et supportés sur un châssis (5) dudit véhicule (1), dans lequel ladite pluralité d'éléments de poutre (304) sont également couplés mutuellement ensemble par l'intermédiaire d'un ou plusieurs éléments de verrouillage (302) qui peuvent se rompre lorsque les forces appliquées sur ceux-ci pendant un impact d'un objet sur le dispositif anti-encastrement (2) dépassent une ou plusieurs valeurs seuil, et dans lequel la rupture desdits un ou plusieurs éléments de verrouillage (302) pendant un événement d'impact dudit objet amène ladite pluralité d'éléments de poutre (304) à se conformer au moins partiellement à un profil de contact dudit objet sur ledit dispositif anti-encastrement (2) pour répartir de manière plus uniforme les forces d'impact survenant lors dudit événement d'impact, **caractérisé en ce que** l'élément de verrouillage (302) est une structure soudée en forme de V continue qui est fermement fixée au niveau de ses extrémités libres sur les surfaces arrière des éléments de poutre (304).

2. Dispositif anti-encastrement (2) selon la revendication 1, dans lequel ladite pluralité d'éléments de poutre (304) peuvent pivoter vers l'intérieur en direction dudit véhicule (1) lors dudit événement d'impact pour se conformer au moins partiellement audit profil de contact dudit objet sur ledit dispositif anti-encastrement (2).

3. Dispositif anti-encastrement (2) selon la revendication 1, dans lequel chaque élément de verrouillage (302) comprend une structure pliée qui est fixée sur ses éléments de poutre adjacents respectifs (304).

4. Dispositif anti-encastrement (2) selon la revendication 3, dans lequel ladite structure pliée présente un ou plusieurs plis reliés ensemble de manière à pouvoir se rompre afin de définir une valeur seuil de force à laquelle ladite structure pliée peut céder et se déplier, lesdits un ou plusieurs plis cassables étant reliés ensemble par au moins un élément parmi : des soudures, des rivets, des vis et des écrous, des saillies venant en prise mutuellement.

5. Dispositif anti-encastrement (2) selon la revendication 3, dans lequel chaque structure de verrouillage (302) peut présenter une première force de seuil à laquelle elle peut se rompre pour se déplier, et une seconde force de seuil au-delà de laquelle la structure de verrouillage (302) peut être entièrement dépliée et se rompre en appliquant une importante tension sur celle-ci.

6. Dispositif anti-encastrement (2) selon la revendication 1, dans lequel une ou plusieurs structures de verrouillage (302) et sont mutuellement différentes pour fournir une plage de valeurs de force mutuellement différentes auxquelles elles peuvent se rompre, ledit dispositif anti-encastrement (2) présentant ainsi une caractéristique d'élasticité plus progressive pendant ledit élément d'impact.

7. Dispositif anti-encastrement (2) selon la revendication 1, mis en place en tant que dispositif anti-encastrement avant ou en tant que dispositif anti-encastrement arrière.

8. Véhicule (1) équipé d'un ou plusieurs dispositifs anti-encastrement (2) selon la revendication 1.

9. Procédé pour fournir une protection anti-encastrement dans un véhicule (1) équipé d'un dispositif anti-encastrement (2), ledit procédé comprenant les étapes consistant à :
(a) recevoir un impact d'un objet sur ledit dispositif anti-encastrement (2) comprenant une pluralité d'éléments de poutre (304) reliés ensemble de manière à pivoter mutuellement et supportés sur un châssis (5) dudit véhicule (1);
(b) lorsque des forces générées pendant ledit impact dudit objet sur ledit dispositif anti-encastrement (2) dépassent une ou plusieurs valeurs seuil, rompre un ou plusieurs éléments de verrouillage (302) couplant mutuellement ladite pluralité d'éléments de poutre (304) ensemble et former une structure soudée en forme de V continue qui est fermement fixée au niveau de ses extrémités libres sur les surfaces arrière des éléments de poutre (304).
(c) permettre à ladite pluralité d'éléments de poutre (304) de pivoter mutuellement de manière à se conformer au moins partiellement à un profil de contact dudit objet sur ledit dispositif anti-encastrement (2) pour répartir de manière plus uniforme les forces d'impact survenant lors dudit impact.

10. Procédé selon la revendication 9, dans lequel ladite structure pliée présente un ou plusieurs plis reliés ensemble de manière à pouvoir se rompre afin de définir une valeur de seuil de force à laquelle ladite structure pliée peut céder et se déplier, lesdits un ou plusieurs plis cassables étant reliés ensemble par au moins un des éléments suivants : des soudures, des rivets, des vis et des écrous, des saillies venant en prise mutuellement.

11. Procédé selon la revendication 9, dans lequel chaque structure de verrouillage (302) peut présenter une première force de seuil à laquelle elle peut se rompre pour se déplier, et une seconde force de seuil au-delà de laquelle la structure de verrouillage (302) est entièrement dépliée et peut se rompre en appliquant une importante tension sur celle-ci.

12. Procédé selon la revendication 9, dans lequel une ou plusieurs structures de verrouillage (302) sont mutuellement différentes pour fournir une plage de valeurs mutuellement différentes de force auxquelles elles peuvent se rompre, ledit dispositif anti-encastrement (2) présentant ainsi une caractéristique d'élasticité plus progressive lors dudit impact.
